# EUROPEAN PATENT SPECIFICATION

(11) **EP 3 124 626 B1**
(45) Date of publication and mention of the grant of the patent: **06.06.2018**
(21) Application number: 15768555.3
(22) Date of filing: 23.03.2015
(51) Int. Cl.: C21B 5/00, C21B 5/06

(54) **METHOD OF OPERATING OXYGEN BLAST FURNACE**
VERFAHREN ZUM BETRIEB EINES SAUERSTOFFHOCHOFENS
PROCÉDÉ DE FONCTIONNEMENT DE HAUT FOURNEAU À OXYGÈNE

(30) Priority: 26.03.2014 JP 2014063802
(43) Date of publication of application: 01.02.2017
(73) Proprietor: JFE Steel Corporation, Tokyo 100-0011 (JP)
(72) Inventor: NOUCHI Taihei, Tokyo 100-0011 (JP); TAKAHASHI Koichi, Tokyo 100-0011 (JP); TERUI Koki, Tokyo 100-0011 (JP); SATO Michitaka, Tokyo 100-0011 (JP); YOSHIOKA Aya, Tokyo 100-0011 (JP)
(74) Representative: Hoffmann Eitle
(86) International application number: PCT/JP2015/058656
(87) International publication number: WO 2015/146872

(56) References cited:
- EP-A1- 2 653 564
- JP-A- 2005 213 591
- JP-A- 2011 202 271
- JP-A- 2013 010 697
- JP-A- 2013 019 008
- JP-A- 2013 040 402
- US-A- 4 917 727

## Description

### TECHNICAL FIELD

This invention relates to a method of operating an oxygen blast furnace wherein pure oxygen is supplied from tuyeres to generate blast furnace gas containing a small amount of nitrogen from a furnace top.

### RELATED ART

Recently, it is strongly demanded to save energy, save resources and control the generation of carbon dioxide gas (CO₂) in steel works in view of global environmental problems. To this end, an operation at a low reduction agent ratio (low RAR) is strongly promoted as the latest blast furnace operation.

In usual blast furnaces, hot blast is blown from tuyeres in which a mixture gas (M gas) obtained by mixing gas generated from a blast furnace with gases generated from a coke oven, a converter and the like is used as a heat source for providing the hot blast. In this case, a reduction agent ratio in the blast furnace is reduced by a heat quantity content of the hot blast. In the conventional blast furnace, fossil fuel mainly composed of carbon is used as the reduction agent, so that it can be said that the blowing of the hot blast controls the amount of the fossil fuel used and the amount of CO₂ generated.

Instead of the above hot blast stove, there has been proposed an oxygen blast furnace wherein pure oxygen of room temperature is blown from tuyeres to produce molten iron (See Patent Document 1). In the oxygen blast furnace, it is aimed that blast furnace gas substantially containing no nitrogen is generated and collected to use as a gas for synthetic chemical industry. However, there is a technical problem in the oxygen blast furnace that since pure oxygen is blown from the tuyeres and reacted with coke, the temperature at the tip of the tuyere becomes abnormally high.

In the operation of the oxygen blast furnace, therefore, it is necessary to control the temperature (tuyere tip temperature) in a combustion zone at the tip of the tuyere (raceway) to an appropriate temperature. In this regard, Patent Document 1 discloses a method wherein the temperature is controlled to a predetermined temperature range by blowing furnace top gas containing CO₂ from the tuyeres. Also, Patent Document 1 proposes a method of blowing H₂O or CO₂ from the tuyeres. Further, a method of blowing heavy oil from the tuyeres is proposed as another method (See Patent Document 2).

Moreover, Patent Document 3 proposes a carbonization gasification method of coal wherein C gas generated from a coke oven is blown into the tuyeres to perform desulfurization and reformulation. However, this method is a technique not related to the control of the tuyere tip temperature.

### PRIOR ART DOCUMENTS

### PATENT DOCUMENTS

Patent Document 1: JP-A-S60-159104
Patent Document 2: JP-A-S63-171807
Patent Document 3: JP-A-S61-14290
Patent Document 4: JP-A-S61-124510

US 4,917,727 discloses a method of operating an oxygen blast furnace wherein pure oxygen is blown from tuyeres to generate a blast furnace gas having a composition suitable as a synthetic chemical industrial gas, the method comprising blowing pure oxygen, pulverized coal, and a temperature control gas from the tuyeres, the temperature control gas being adapted to prevent a temperature rise at the nose of the tuyere.

### SUMMARY OF THE INVENTION

### TASK TO BE SOLVED BY THE INVENTION

In the oxygen blast furnace of such a type that pure oxygen is blown from the tuyeres instead of hot blast as disclosed in Patent Document 1, there is a feature that the tuyere tip temperature becomes unusually high, so that it is necessary to perform the operation by lowering the tuyere tip temperature well. This is a technical problem inherent to the oxygen blast furnace because the tuyere tip temperature is not excessively increased in the conventional blast furnace of blowing hot blast from the tuyeres.

In the method disclosed in Patent Document 1, H₂O and CO₂ are blown from the tuyeres together with pure oxygen of room temperature, leadingto the following endothermic reaction for lowering the tuyere tip temperature.
This reaction is an endothermic reaction comprising combustion (oxidation) and reverse reaction (reduction), which can lower the tuyere tip temperature abnormally raised. On the other hand, the reactions of the following equations (1) and (2) increase an amount of coke used because solid-state carbon is consumed at the tuyere tip (raceway). As a result, there is a problem that the amount of fossil fuel used and the amount of CO₂ generated are increased in the oxygen blast furnace.

H₂O + C → H₂ + CO (1)

CO₂ + C → 2CO (2)

In the method disclosed in Patent Document 2, the tuyeres are cooled through thermal decomposition of heavy oil blown from the tuyeres, so that it is possible to lower the tuyere tip temperature in the oxygen blast furnace without increasing the amount of coke used. On the other hand, since droplets of heavy oil are blown in the method of cooling the tuyere by heavy oil, in an operation by blowing a large amount of pulverized coal as disclosed in Patent Document 4, soot is generated, which easily causes deterioration of an effect due to unburning and a phenomenon of clogging a packed bed with the soot inside of the furnace or shooting through the bed.

It is an object of the invention to solve the aforementioned problems inherent to the conventional techniques and to propose a method of operating an oxygen blast furnace wherein temperature lowering of the combustion zone at the tuyere tip can be realized while decreasing an emission amount of CO₂ as compared to the conventionally known value.

Also, it is another object of the invention to propose a method of operating an oxygen blast furnace wherein the generation of soot as a problem in the use of heavy oil is avoided and stable blowing of pure oxygen from the tuyeres can be realized.

### SOLUTION FOR TASK

The invention developed for realizing the above objects is a method of operating an oxygen blast furnace wherein at least pure oxygen is blown from tuyeres to generate blast furnace gas containing a small amount of nitrogen from a furnace top, characterized in that a temperature of a combustion zone at the tuyere tip is lowered by blowing a tuyere-blowing gas, in which the sum of volume fractions of hydrocarbon and hydrogen is not less than 50%, together with the pure oxygen from the tuyeres.

In the method of operating an oxygen blast furnace according to the invention configured as previously described, it is thought to be preferable means that:
(1) natural gas, propane gas, coke oven gas (C gas), or biogas is used as the tuyere-blowing gas;
(2) a mixture gas of blast furnace gas and coke oven gas is used as the tuyere-blowing gas.

### EFFECT OF THE INVENTION

According to the method of operating an oxygen blast furnace in the invention, abnormally high temperature in the combustion zone at the tuyere tip as a problem inherent to the oxygen blast furnace can be prevented and lowered by blowing pure oxygen from the tuyeres and simultaneously blowing a tuyere-blowing gas in which the sum of volume fractions of hydrocarbon and hydrogen is not less than 50%. Also, the invention has an effect of decreasing the emission amount of CO₂ as compared to the method of lowering the temperature at the tuyere tip as used in the conventional method of operating an oxygen blast furnace. Further, according to the invention, it becomes possible to avoid the generation of soot as a problem in the use of liquid fuels such as heavy oil and stably perform blowing of pure oxygen suitable for adjusting the temperature at the tuyere tip.

### BRIEF DESCRIPTION OF THE DRAWINGS

FIG. 1 is a schematic view illustrating an example of a configuration of an oxygen blast furnace and surrounding equipment as a target of the operating method according to the invention.
FIG. 2 is a schematic view illustrating an example of a configuration of a tuyere used in the method of operating an oxygen blast furnace according to the invention.
FIG. 3 is a graph showing an amount of CO₂ emitted from a blast furnace in examples according to the invention and comparative examples.
FIG. 4 is a graph showing a relation between a ratio of hydrogen and hydrocarbon in a tuyere-blowing gas used in the invention and an emission amount of CO₂.

### EMBODIMENTS FOR CARRYING OUT THE INVENTION

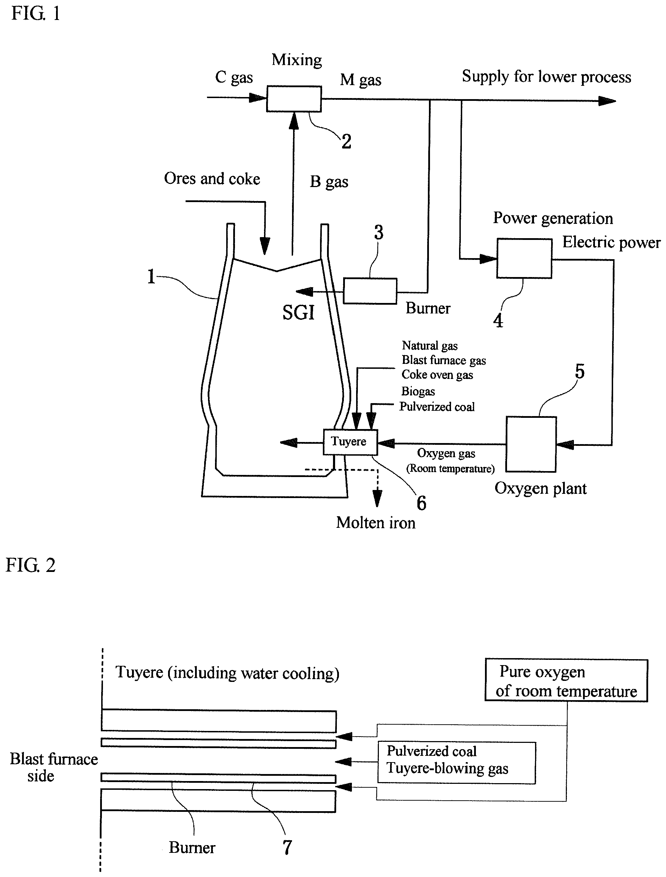

FIG. 1 is a schematic view illustrating an example of an oxygen blast furnace and surrounding equipment as a target of the operating method according to the invention. In the configuration example shown in FIG. 1, numeral 1 is an oxygen blast furnace, numeral 2 is a mixer for mixing gases, numeral 3 is a burner for preheating gases to obtain a preheated gas (SGI), numeral 4 is a power generator using blast furnace exhaust gas, numeral 5 is an oxygen plant producing pure oxygen, and numeral 6 is a tuyere used for blowing oxygen or the like into the oxygen blast furnace 1.

In the configuration shown in FIG. 1, ores and coke are charged into the oxygen blast furnace 1 from above in the same way as the conventional blast furnace. Also, pure oxygen of room temperature is blown from the tuyere 6 in the lower portion of the furnace. The pure oxygen is produced from air in the oxygen plant 5 using an isolation technique such as cryogenic separation or the like, for which electric power is consumed. Therefore, electric power is generated in the power generator 4 by using coke oven gas, blast furnace gas or mixture gas thereof as a combustion gas containing a large amount of CO, which is used in the method of producing the pure oxygen. Also, pulverized coal and a tuyere-blowing gas such as natural gas, coke oven gas or the like are blown from the lower tuyeres 6 together with pure oxygen.

As the tuyere 6 is used a tuyere including a burner for oxygen-pulverized coal therein such as a tuyere disclosed in JP-A-S63-171811. In this case, pulverized coal and the tuyere-blowing gas may be blown from the inner burner, while pure oxygen may be blown from the outer tuyere. In this connection, there are a method wherein a burner is disposed in the tuyere and the pulverized coal and the tuyere-blowing gas are mixed and blown from the burner, and a method wherein two burners are disposed in the tuyere and the pulverized coal is blown from one of the burners and the tuyere-blowing gas is blown from another.

On the other hand, a gas flow amount is small in the oxygen blast furnace 1, which causes a problem of lowering the temperature at the furnace top. For example, if the temperature of furnace top gas becomes not higher than 100°C, dew condensation is generated at the furnace top portion to cause operation troubles. Therefore, in order to keep the temperature of not lower than 100°C at the furnace top, there may be used a method of circularly flowing a part of a blast furnace exhaust gas (B gas) as a combustion gas containing a large amount of CO into the burner 3 to perform partial combustion and blowing the resulting preheated gas of high temperature (SGI) from a shaft portion of the blast furnace as shown in FIG. 1.

Moreover, the temperature at the furnace tip is preferable to be approximately 2000°C - 2600°C. When the temperature at the tuyere tip is lower than 2000°C, the combustion of pulverized coal becomes insufficient as mentioned in JP-A-2003-247008, and hence it is worried that unburnt char is increased to cause an increase of pressure loss in the inside of the blast furnace. In the oxygen blast furnace, pure oxygen of room temperature is blown at a high flow rate (not less than 100 m/s) from the tuyeres instead of hot blast (not lower than 1000°C), whereby an effect of cooling the tuyeres through oxygen of room temperature itself is obtained. That is, the fear of damaging the tuyere refractory as disclosed in JP-A-2003-247008 is small, so that the temperature at the tuyere tip is not necessary to be not higher than 2300°C. On the other hand, according to JP-A-S58-58207, it is pointed out that when the temperature at the tuyere tip exceeds 2600°C, the direct reduction ratio is rapidly increased to cause an increase of endothermic reaction in the inside of the furnace and hence the operation of the furnace becomes difficult. In view of the above, it is preferable to control the temperature at the tuyere tip to 2000°C - 2600°C.

Since the temperature at the tuyere tip is lowered by blowing a gas blowing material containing hydrocarbon or hydrogen, it is preferable to control the blowing amount of the gas blowing material for making the temperature at the tuyere tip an appropriate temperature. Although the pulverized coal is expected to have an action of lowering the temperature at the tuyere tip similar to the gas blowing material containing hydrocarbon or hydrogen, when the pulverized coal is excessively blown, the pressure loss in the inside of the furnace is increased to cause an unstable operation. Therefore, it is impossible to lower the temperature at the tuyere tip to an appropriate temperature only by using the pulverized coal. To this end, the gas blowing material containing hydrocarbon or hydrogen is preferably used for controlling the temperature at the tuyere tip (temperature lowering). Moreover, the temperature at the tuyere tip can be lowered even by blowing heavy oil. However, since there is a fear of generating soot as previously mentioned, a large amount of heavy oil cannot be blown. In this respect, it is difficult to sufficiently lower the temperature at the tuyere tip in the oxygen blast furnace by blowing heavy oil.

In the invention, it is necessary that the total content of hydrogen and hydrocarbon in the tuyere-blowing gas is made to not less than 50% in terms of volume fraction. When the total ratio of hydrocarbon and hydrogen in the tuyere-blowing gas is less than 50%, the ability of cooling tuyere is reduced and the temperature at the tuyere tip cannot be lowered sufficiently. If it is intended to lower the temperature at the tuyere tip to an appropriate temperature when the content of hydrogen and hydrocarbon is less than 50%, it is necessary to blow an oxide-based coolant for tuyere such as CO₂, H₂O or the like together with hydrogen or hydrocarbon. In the latter blowing, coke is consumed by a solution loss reaction, and hence the amount of CO₂ generated is increased.

### EXAMPLE

In this example, the effect of the invention is confirmed by a simulation calculating heat and mass balance in the blast furnace.

This example is an example of an oxygen blast furnace supposed to have a tapping ratio of 5, a furnace volume of 2515 m³ and a tapping rate of 12573 t/day, which has a configuration of oxygen blast furnace and surrounding equipment as shown in FIG. 1. As a tuyere is used a type of a tuyere including a burner tube 7 therein as shown in FIG. 2. Then, pulverized coal and tuyere-blowing gas are blown through the burner tube 7, while pure oxygen of 25°C is blown from a space between the tuyere and the burner tube 7. The burner tube 7 has an outer diameter of 89 mm and the tuyere has an inner diameter of 140 mm. In order to prevent dew condensation at the top of the blast furnace, 200 Nm³/t as a part of a blast furnace exhaust gas (B gas) is recirculated and partly burnt to 1000°C with a burner 3, and the resulting preheated gas (SGI) is blown from a shaft portion of the furnace. As iron ore charged from the furnace top is used a mixture of 80 mass% of sintered ore and 20 mass% of lump ore, and a reaction efficiency in the shaft portion is supposed blowing material itself is an oxide such as CO₂ or H₂O and coke is consumed to be 94%. A condition of blowing pulverized coal of 300 kg/t from the tuyeres is a base condition of the examination.

As an example adapted to the invention (Example) is considered a condition of blowing natural gas, coke oven gas (C gas) and propane gas as the tuyere-blowing gas. As a comparative example is used a method of blowing blast furnace gas, heavy oil and steam as the tuyere-blowing material from the tuyeres. Further, a condition of blowing only pulverized coal through the tuyeres of the oxygen blast furnace and a condition of the conventional hot blast furnace are adopted as comparative examples. In order to compare an effect of reducing CO₂ emission by these the tuyere-blowing materials, the CO₂ emission amounts (kg-CO₂/t) in the examples and the comparative examples are compared under a common condition that the temperature at the tuyere tip is made to not higher than 2600°C by controlling the blowing amount of the tuyere-blowing gas. Table 1 shows a blowing amount of the tuyere-blowing material, a ratio of hydrogen and hydrocarbon in the tuyere-blowing gas and a temperature at the tuyere tip in the examples and the comparative examples under the condition that the temperature at the tuyere tip is controlled to not higher than 2600°C.

**Table 1**

| | Comparative Example | Comparative Example: Oxygen blast furnace | | | | Example | | |
|---|---|---|---|---|---|---|---|---|
| | Conventional blast furnace | Blast furnace gas | Heavy oil | Steam | Pulverized coal | Natural gas | C gas | Propane |
| Coke ratio (kg/t) | 379.592 | 255.199 | 187.049 | 273.2243 | 173.187 | 206.125 | 210.633 | 197.849 |
| Pulverized coke ratio (kg/t) | 120 | 300 | 300 | 300 | 367 | 300 | 300 | 300 |
| Blowing amount at tuyere | None | 68 Nm³/t | 42 kg/t | 41 kg/t | - | 26 kg/t | 26 kg/t | 32 kg/t |
| H₂ + CH x ratio (-) | 0 | 0.08 | 0 | 0 | 0 | 1 | 0.8942 | 1 |
| Tuyere tip temperature (°C) | 2286.685 | 2595.575 | 2596.845 | 2597.268 | 2598.311 | 2599.308 | 2599.246 | 2591.584 |

| | | | | | | | | |
|---|---|---|---|---|---|---|---|---|
| Note) C gas: Coke oven gas | | | | | | | | |

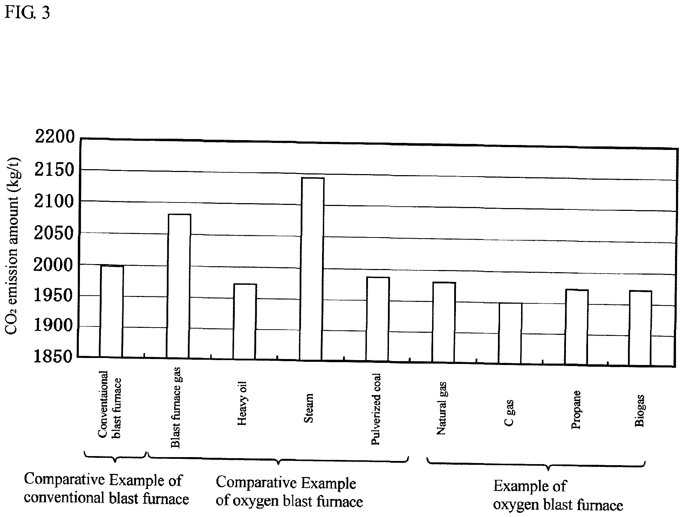

In FIG. 3 are shown evaluation results of the CO₂ emission amount. As seen from FIG. 3, the CO₂ emission amount becomes larger in the blowing of blast furnace gas and the blowing of steam by the conventional method as compared to the conventional blast furnace. This is due to the fact that the when this material is thermally decomposed to CO and H₂. Also, the CO₂ emission amount becomes smaller in the blowing of heavy oil and the blowing of pulverized coal by the conventional method as compared to the conventional blast furnace, but it is difficult to perform these blowing means due to the generation of soot and constraint in the upper limit of the pulverized coal combustion rate as previously mentioned. On the contrary, it is confirmed that the CO₂ emission amount can be suppressed while lowering the tuyere tip temperature in the blowing of natural gas, the blowing of coke oven gas and the blowing of propane as an example (Invention Example) because a tuyere-blowing gas having a volume fraction of hydrogen and hydrocarbon of not less than 50% is blown from the tuyeres. In an example (Invention Example) of blowing biogas, coke is consumed when CO₂ contained in the biogas by about 30% is thermally decomposed into CO and H₂ and an amount of CO₂ generated is increased correspondingly. However, since the biogas is carbon-neutral, it is not necessary to take CO₂ generated from the biogas into an account. Therefore, the amount of CO₂ generated can be suppressed while lowering the tuyere tip temperature.

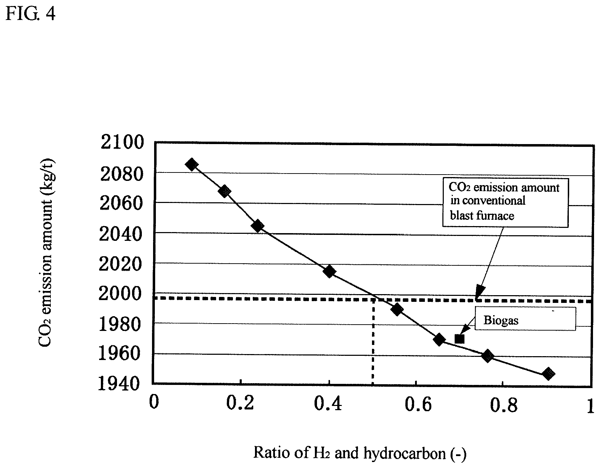

In FIG. 4 is shown a relation between the sum of volume fractions of hydrogen and hydrocarbon in the tuyere-blowing gas and the CO₂ emission amount considering conditions that blast furnace gas and coke oven gas are mixed at different ratios. The condition for biogas is also shown in this figure. It can be seen that as the ratio of coke oven gas is increased, the sum of volume fractions of hydrogen and hydrocarbon is increased and the CO₂ emission amount is decreased. As compared with the CO₂ emission amount in the conventional blast furnace, when the ratio of hydrogen and hydrocarbon in the tuyere-blowing gas is not less than 50%, the CO₂ emission amount becomes smaller than that in the conventional blast furnace. It can be confirmed from the above that the ratio of hydrogen and hydrocarbon is preferable to be not less than 50%.

### INDUSTRIAL APPLICABILITY

In the method of operating an oxygen blast furnace according to the invention as explained above, the temperature lowering of the combustion zone at the tuyere tip can be realized while decreasing the CO₂ emission amount as compared to the conventional ones, and the generation of soot as a problem caused by using heavy oil can be avoided, and further pure oxygen can be stably blown from the tuyeres, so that the invention can be preferably applied in the operation of the oxygen blast furnace.

### DESCRIPTION OF REFERENCE SYMBOLS

- 1: oxygen blast furnace
- 2: mixer
- 3: burner
- 4: power generator
- 5: oxygen plant
- 6: tuyere
- 7: burner tube

## Claims

1. A method of operating an oxygen blast furnace (1) wherein at least pure oxygen of room temperature is blown from tuyeres (6) to generate blast furnace gas containing a small amount of nitrogen from a furnace top, **characterized in that** a temperature of a combustion zone at a tuyere tip is lowered by blowing a tuyere-blowing gas, in which the sum of volume fractions of hydrocarbon and hydrogen is not less than 50%, together with the pure oxygen from the tuyere.

2. The method of operating an oxygen blast furnace according to claim 1, wherein natural gas, propane gas, coke oven gas (C gas) or biogas is used as the tuyere-blowing gas.

3. The method of operating an oxygen blast furnace according to claim 1, wherein a mixture gas of blast furnace gas and coke oven gas is used as the tuyere-blowing gas.

## Patentansprüche

1. Verfahren zum Betreiben eines Sauerstoffhochofens (1), bei dem zumindest reiner Sauerstoff auf Raumtemperatur aus Düsen (6) geblasen wird, um Hochofengas zu erzeugen, das eine kleine Menge Stickstoff von einer Ofenoberseite enthält, **dadurch gekennzeichnet, dass**
eine Temperatur einer Verbrennungszone an einer Düsenspitze durch Blasen eines Düsenblasgases, in dem die Summe der Volumenanteile von Kohlenwasserstoff und Wasserstoff nicht weniger als 50% beträgt, zusammen mit dem reinen Sauerstoff aus der Düse, gesenkt wird.

2. Verfahren zum Betreiben eines Sauerstoffhochofens nach Anspruch 1, wobei
Erdgas, Propangas, Koksofengas (C-Gas) oder Biogas als das Düsenblasgas verwendet wird.

3. Verfahren zum Betreiben eines Sauerstoffhochofens nach Anspruch 1, wobei
ein Gasgemisch aus Hochofengas und Koksofengas als das Düsenblasgas verwendet wird.

## Revendications

1. Procédé de fonctionnement d'un haut-fourneau à oxygène (1), dans lequel au moins de l'oxygène pur à température ambiante est soufflé depuis des tuyères (6) pour générer du gaz de haut-fourneau contenant une faible quantité d'azote depuis le haut du fourneau, **caractérisé en ce qu'**une température d'une zone de combustion à une extrémité de tuyère est diminuée par soufflage d'un gaz de soufflage de tuyère, dans lequel la somme des fractions volumiques d'hydrocarbures et d'hydrogène n'est pas inférieure à 50 %, conjointement à l'oxygène pur de la tuyère.

2. Procédé de fonctionnement d'un haut-fourneau à oxygène selon la revendication 1, dans lequel un gaz naturel, le gaz propane, un gaz de cokerie (gaz C) ou un biogaz est utilisé en tant que gaz de soufflage de tuyère.

3. Procédé de fonctionnement d'un haut-fourneau à oxygène selon la revendication 1, dans lequel un gaz de mélange de gaz de haut-fourneau et de gaz de cokerie est utilisé en tant que gaz de soufflage de tuyère.
